# EUROPÄISCHE PATENTANMELDUNG

(11) **EP 0 841 207 A2**
(43) Veröffentlichungstag der Anmeldung: **13.05.1998**
(21) Anmeldenummer: 97119085.5
(22) Anmeldetag: 31.10.1997
(51) Int. Cl.: B60L 5/26

(54) **Stromabnehmer**

(30) Priorität: 08.11.1996 DE 19646178
(71) Anmelder: SIEMENS AKTIENGESELLSCHAFT, 80333 München (DE)
(72) Erfinder: Düll, Hans-Jürgen, Dipl.-Ing., 91094 Langensendelbach (DE)

(57) **Zusammenfassung**

Stromabnehmer, der mittels einer Stellvorrichtung (2, 3) entgegen der Neigung eines Wagenkastens (4) um einen Stellwinkel (γ) rückführbar ist, wobei die Stellvorrichtung (2, 3) wenigstens einen Stellantrieb (9, 19) sowie wenigstens zwei isolierte Lenkerstangen (5 - 7, 15 - 18) umfaßt, wobei der Stellantrieb (9, 19) eine isolierte Antriebsstange (10, 20) aufweist, die mit ihrem freien Ende direkt an einer der Stirnseiten des Stromabnehmergestells (1), vorzugsweise an der breiten Stirnseite, angelenkt ist, und der Stellantrieb (9, 19) mit seinem Gehäuse (11, 21) direkt am Dach (8) des Wagenkastens (4) angelenkt ist, und wobei die isolierten Lenkerstangen (5 - 7, 15 - 18) zu beiden Seiten der Längsachse des Wagenkastens (4) an gegenüberliegenden Ecken des Stromabnehmergestells (1) angeordnet sind und jeweils mit ihrem einen Ende direkt am Stromabnehmergestell (1) und mit ihrem anderen Ende direkt am Dach (8) des Wagenkastens (4) angelenkt sind.

## Beschreibung

Die Erfindung betrifft einen Stromabnehmer, der mittels einer Stellvorrichtung entgegen der Neigung eines Wagenkastens um einen Stellwinkel rückführbar ist.

Ein derartiger Stromabnehmer ist durch die DE-OS 22 43 405 bekannt. Im bekannten Fall ist der Stromabnehmer auf einer Grundplatte befestigt, die bei Kurvenfahrt mittels einer Stellvorrichtung um einen Stellwinkel entgegen der Neigung des Wagenkastens rückführbar ist. Durch die Rückführung der Grundplatte wird auch der Stromabnehmer um einen entsprechenden Stellwinkel zurückgeführt. Durch die Rückführung des Stromabnehmers soll erreicht werden, daß dessen Schleifleiste auch bei einer Neigung des Wagenkastens im wesentlichen waagrecht am Fahrdrahtspiegel, das ist die Gleitfläche für die Schleifleiste des Stromabnehmers, entlanggleitet. Die Stellvorrichtung umfaßt im bekannten Fall mehrere Isolatoren, die zusammen mit ihren Armaturen jeweils eine isolierte Lenkerstange bilden und nach Art einer Wippe jeweils um eine im Dach des Wagenkastens liegende horizontale Achse schwenkbar sind. Die Isolatoren sind mit ihrem einen Ende an der Grundplatte drehbar angelenkt und mit ihren in das Innere des Wagenkastens reichenden Armaturen drehbar an einer Schubstange angelenkt. Die Schubstange ist wiederum über Kipphebel und über Zugstangen, die im Wagenkasten angeordnet sind, mit dem Fahrwerk verbunden. Die im Dach des Wagenkastens liegende horizontale Achse bildet damit die drehbare Lagerung für die Schwenkbewegung des Stromabnehmers.

Durch die Anlenkung der Grundplatte an den Isolatoren sowie durch die Anlenkung der Schubstange an den Armaturen der Isolatoren werden die Isolatoren bei einer Schwenkbewegung um die im Dach des Wagenkastens liegende Achse während der Rückführung des Stromabnehmers relativ stark auf Biegung beansprucht. Weiterhin kann durch die Anordnung der Schubstange sowie der Zugstangen und der Kipphebel innerhalb des Wagenkastens kein Fahrgastraum unter dem Stromabnehmer vorgesehen werden, da eine Vergrößerung des Wagenkastenbegrenzungsprofils unzulässig ist.

Aufgabe der vorliegenden Erfindung ist es deshalb, einen niedrig bauenden Neigestromabnehmer in Leichtbauweise zu schaffen.

Die Aufgabe wird erfindungsgemäß durch die Merkmale des Anspruchs 1 gelöst. Vorteilhafte Ausgestaltungen der Erfindung sind in den weiteren Ansprüchen beschrieben.

Der Stromabnehmer gemäß Anspruch 1 ist mittels einer Stellvorrichtung entgegen der Neigung eines Wagenkastens um einen Stellwinkel rückführbar. Die Stellvorrichtung des erfindungsgemäßen Stromabnehmers weist wenigstens einen Stellantrieb und wenigstens zwei isolierte Lenkerstangen auf.

Der Stellantrieb umfaßt erfindungsgemäß eine isolierte Antriebsstange, die mit ihrem freien Ende direkt an einer der Stirnseiten des Stromabnehmergestells, vorzugsweise an der breiten Stirnseite, angelenkt ist. Weiterhin ist der Stellantrieb mit seinem Gehäuse direkt am Dach des Wagenkastens angelenkt. Die Lenkerstangen sind zu beiden Seiten der Längsachse des Wagenkastens an gegenüberliegenden Ecken des Stromabnehmergestells angeordnet und jeweils mit ihrem einen Ende direkt am Stromabnehmergestell und mit ihrem anderen Ende direkt am Dach des Wagenkastens angelenkt. Eine in Inneren des Wagenkastens angeordnete Schubstange entfällt.

Der erfindungsgemäße Stromabnehmer weist dadurch, daß der Stellantrieb mit dem freien Ende der isolierten Antriebsstange und dadurch, daß die isolierten Lenkerstangen mit ihrem einen Ende jeweils direkt am Stromabnehmergestell angelenkt sind, eine geringe Bauhöhe auf. Weiterhin wird dadurch, daß für die neigbare Anordnung des Stromabnehmers auf dem Dach des Wagenkastens keine Grundplatte bzw. kein Grundträger erforderlich ist, das Gewicht des Stromabnehmers erheblich reduziert.

Da der Stellantrieb und die isolierten Lenkerstangen ausschließlich an ihren beiden Enden gelenkig gelagert sind, treten bei dem Stellantrieb (Gehäuse und isolierte Antriebsstange) und bei den isolierten Lenkerstangen nur geringe Biegebeanspruchungen auf. Der Stellantrieb und die isolierten Lenkerstangen werden überwiegend in Richtung ihrer Längsachsen mechanisch belastet.

Bei dem erfindungsgemäßen Stromabnehmer sind die Isolatoren damit nur auf die betriebsbedingt erforderliche Spannungsfestigkeit abzustimmen. Eine mechanische Überdimensionierung der Isolatoren, die zu einem unnötig hohen Gewicht führen würde, ist bei dem Stromabnehmer nach Anspruch 1 nicht erforderlich.

Aufgrund der durch die Erfindung erzielbaren Gewichtsreduzierung können auch kleinere und damit leichtere Stellantriebe eingesetzt werden. Damit erzielt man bei dem Stromabnehmer nach Anspruch 1 neben einer deutlichen Gewichtsreduzierung auch eine erheblich geringere Bauhöhe.

Der erfindungsgemäße Stromabnehmer benötigt wenigstens zwei isolierte Lenkerstangen, um eine gleichmäßige Rückführung des Stromabnehmergestells entgegen der Neigung des Wagenkastens sicherzustellen. Vorteilhafter ist es jedoch, den Stromabnehmer gemäß Anspruch 7 oder 8 auszuführen. Sowohl durch zwei isolierte Lenkerstangen, die an den Ecken der breiten Stirnseite angeordnet sind, und eine isolierte Lenkerstange, die mittig zur schmalen Stirnseite angeordnet ist, als auch durch vier, an den Ecken des Stromabnehmergestells angeordneten isolierten Lenkerstangen wird die Biegebeanspruchung der einzelnen isolierten Lenkerstangen nochmals verringert.

Bei einer Ausgestaltung gemäß Anspruch 9 wird die Seitenführung des Stromabnehmergestells durch Seitenführungslenker übernommen. Dadurch wird die Biegebeanspruchung der isolierten Lenkerstangen und der isolierten Antriebsstange nochmals verringert.

Weitere Vorteile und Einzelheiten der Erfindung ergeben sich aus der nachfolgenden Beschreibung von Ausführungsbeispielen anhand der Zeichnung und in Verbindung mit den weiteren Ansprüchen. Es zeigen:
- FIG 1: eine stirnseitige Ansicht auf eine erste Ausführungsform des erfindungsgemäßen Stromabnehmers,
- FIG 2: eine Draufsicht auf den Stromabnehmer gemäß FIG 1,
- FIG 3: eine Seitenansicht auf den Stromabnehmer gemäß FIG 1,
- FIG 4: eine stirnseitige Ansicht auf eine zweite Ausführungsform des erfindungsgemäßen Stromabnehmers,
- FIG 5: eine Draufsicht auf den Stromabnehmer gemäß FIG 4,
- FIG 6: eine Seitenansicht auf den Stromabnehmer gemäß FIG 4,
- FIG 7: eine Detaildarstellung einer Anlenkung des Stromabnehmergestells an ein Fahrwerk in einer weiteren Ausführungsform,
- FIG 8: eine Detaildarstellung zu der in FIG 5 und 6 dargestellten Lagerung der Lenkerwelle.

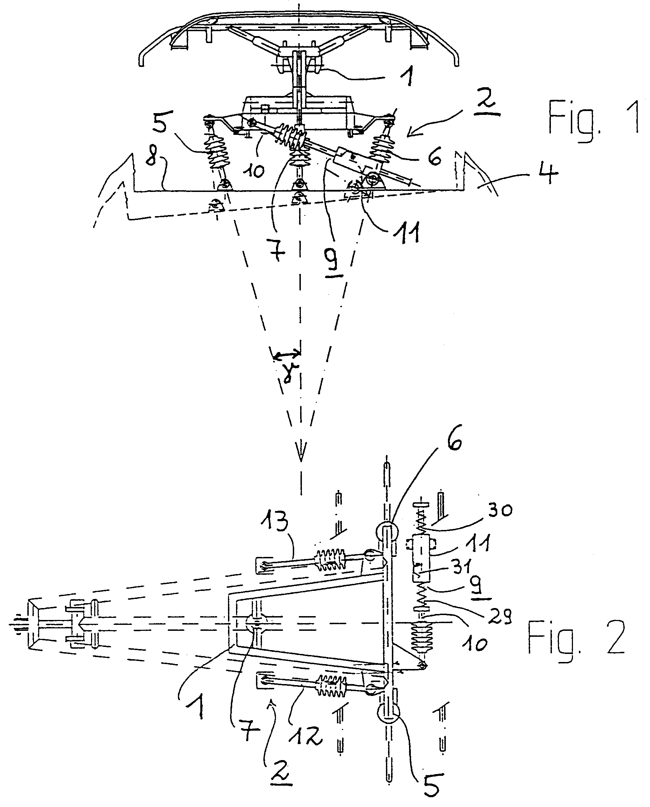

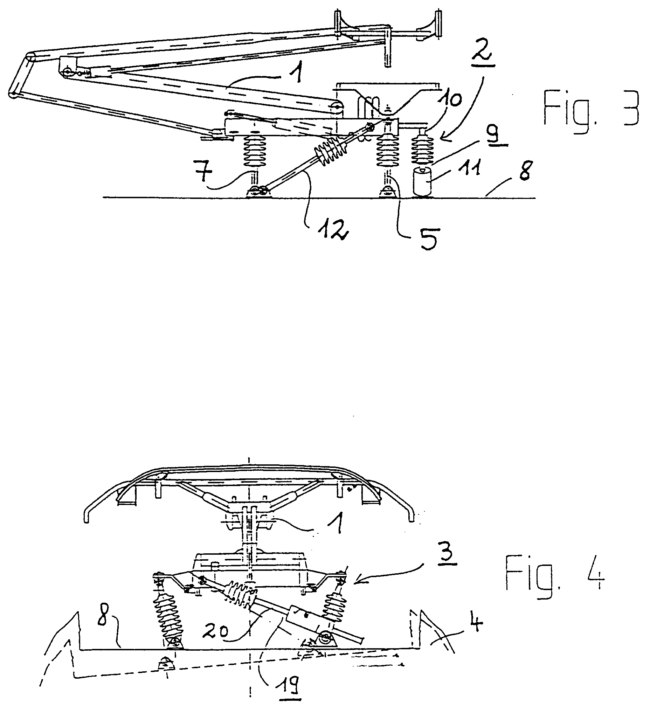

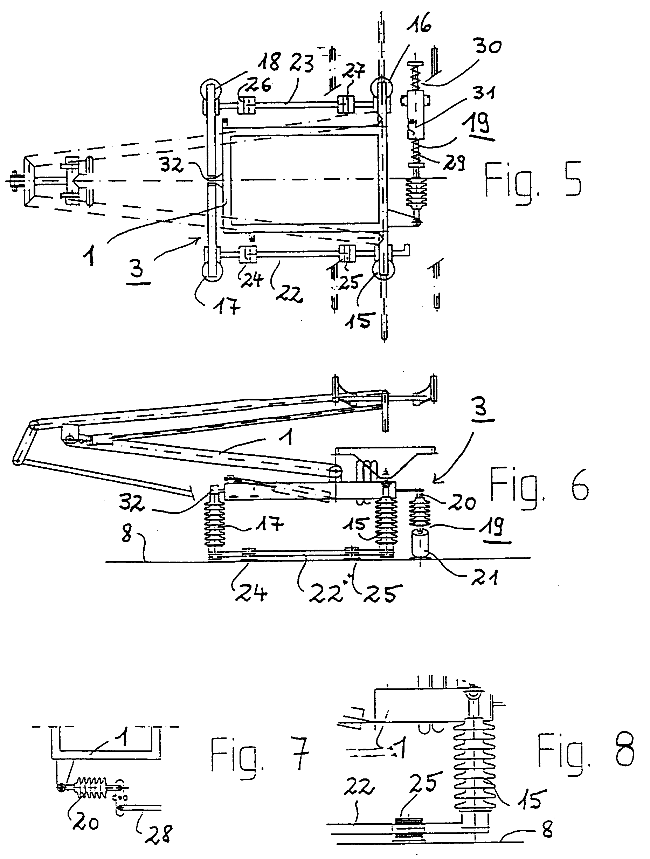

In den FIG 1 bis 6 ist mit 1 ein Stromabnehmergestell bezeichnet, das mittels einer Stellvorrichtung 2 (FIG 1 bis 3) bzw. mittels einer Steilvorrichtung 3 (FIG 4 bis 6) entgegen der Neigung eines Wagenkastens 4 um einen Stellwinkel γ rückführbar ist.

Bei dem Ausführungsbeispiel gemäß FIG 1 bis 3 umfaßt die Stellvorrichtung 2 drei isolierte Lenkerstangen 5 bis 7. Zwei isolierte Lenkerstangen 5 und 6 sind an den Ecken der breiten Stirnseite des Stromabnehmergestells 1 angeordnet. Die dritte isolierte Lenkerstange 7 ist in der Mitte der schmalen Stirnseite des Stromabnehmergestells 1 angeordnet. Die isolierten Lenkerstangen 5 bis 7 sind jeweils mit ihrem einen Ende direkt am Stromabnehmergestell 1 und mit ihrem anderen Ende direkt am Dach 8 des Wagenkastens 4 angelenkt.

Die Stellvorrichtung 2 des in FIG 1 bis 3 dargestellten Stromabnehmers umfaßt weiterhin einen Stellantrieb 9 mit einer isolierten Antriebsstange 10. Die isolierte Antriebsstange 10 ist mit ihrem freien Ende direkt an der breiten Stirnseite des Stromabnehmergestells 1 angelenkt. Weiterhin ist der Stellantrieb 9 mit seinem Gehäuse 11 direkt am Dach 8 des Wagenkastens 4 angelenkt.

Bei der in den FIG 1 bis 3 dargestellten Ausführungsform des erfindungsgemäßen Stromabnehmers ist zu beiden Seiten des Stromabnebmergestells 1 jeweils ein isolierter Seitenführungslenker 12 bzw. 13 angeordnet. Beide Seitenführungslenker 12 und 13 sind jeweils mit ihrem einen Ende an der Längsseite des Stromabnehmergestells 1 und mit ihrem anderen Ende am Dach 8 des Wagenkastens 4 angelenkt.

Bei der in den FIG 4 bis 6 gezeigten Ausführungsform des erfindungsgemäßen Stromabnehmers umfaßt die Stellvorrichtung 3 vier isolierte Lenkerstangen 15 bis 18, die an den Ecken des Stromabnebmergestells 1 angeordnet sind. Die isolierten Lenkerstangen 15 bis 18 sind jeweils mit ihrem einen Ende direkt am Stromabnehmergestell 1 und mit ihrem anderen Ende direkt am Dach 8 des Wagenkastens 4 angelenkt.

Weiterhin umfaßt die Stellvorrichtung 3 einen Stellantrieb 19 mit einer isolierten Antriebsstange 20. Die isolierte Antriebsstange 20 ist mit ihrem freien Ende direkt an der in Fahrtrichtung betrachtet hinteren Stirnseite des Stromabnehmergestells 1 angelenkt. Der Stellantrieb 19 ist mit seinem Gehäuse 21 direkt am Dach 8 des Wagenkastens 4 angelenkt.

Bei dem Stromabnehmer gemäß den FIG 4 bis 6 sind jeweils die beiden isolierten Lenkerstangen 15 und 17 bzw. 16 und 18, die gemeinsam an einer Längsseite des Stromabnehmergestells 1 angeordnet sind, formschlüssig mit einer Lenkerwelle 22 bzw. 23 verbunden. Die Lenkerwellen 22 und 23 sind über Lager 24 bis 27 am Dach 8 des Wagenkastens 4 gehaltert. In FIG 8 ist diese Lagerung am Beispiel des Lagers 25 im Detail dargestellt.

Die Lenkerwellen 22 und 23 können gemäß einer weiteren, in den FIG 1 bis 8 nicht dargestellten Ausführungsform als Exzenterwellen ausgebildet sein. Alternativ können die isolierten Lenkerstangen 5 bis 7 bzw. 15 bis 18 in ihrer Länge verstellbar sein. Durch derartige Ausgestaltungen kann der sich bei einer Neigung des Wagenkastens 4 verringernde Abstand zwischen dem Stromabnehmergestell 1 und dem Dach 8 des Wagenkastens 4 zumindest vergrößert werden. Dadurch kann dieser Abstand bei geneigtem Wagenkasten 4 nahezu genauso groß, gleich groß oder sogar größer als bei nicht geneigtem Wagenkasten werden.

Alternativ zu den beiden, in FIG 1 bis 6 dargestellten Ausführungsbeispielen kann die isolierte Antriebsstange 20 über ein Gestänge 28 mit dem Fahrwerk des Wagenkastens 4 gekoppelt sein. In FIG 7 ist diese Kopplung näher dargestellt.

Der Stellantrieb 9 bzw. 19 weist in den dargestellten Ausführungsbeispielen jeweils zusätzliche Rückzugsfedern 29 und 30 sowie eine Sperrklinke 31 zur Fixierung auf. Die Rückzugsfedern 29 und 30 können gemäß einem in den FIG 1 bis 3 nicht dargestellten Ausführungsbeispiel auch an den isolierten Seitenführungslenkern 12 und 13 angeordnet sein. Die Rückzugsfedern 29 und 30 dienen dazu, das Stromabnehmergestell 1 im Störfall (Ausfall des Stellantriebs 9 bzw, 19 oder Beschädigung des Gestänges 28) in die Mittenlage zu bringen, in der dann die Fixierung mittels Sperrklinke 31 erfolgt. Der Einsatz von Rückzugsfedern setzt jedoch voraus, daß als Stellantriebe reibungsarme Spindelantriebe und keine Schneckenantriebe mit hoher Reibung verwendet werden.

Das Stromabnehmergestell 1 ist in dem in FIG 4 bis 6 gezeigten Ausführungsbeispiel mit einer schwenkbaren Stütze 32 für die isolierten Lenkerstangen 17 und 18 ausgerüstet. Die schwenkbarer Stütze 32 bildet zusammen mit den isolierten Lenkerstangen 15 und 16 eine Dreipunktauflage für das Stromabnehmergestell 1. Dadurch werden mechanische Verspannungen der isolierten Lenkerstangen 15 bis 18, die z. B. durch Toleranzen oder Elastizitäten auf dem Dach 8 des Wagenkastens 4 entstehen, verhindert. Die schwenkbare Stütze 32 ist hierzu zweckmäßigerweise elastisch gelagert, weil hierdurch Ungenauigkeiten, hervorgerufen durch Montage, Neigung, Torsion und temperaturabhängige Längenausdehnungskoeffizienten, in jeder Raumrichtung ausgeglichen werden.

## Patentansprüche

1. Stromabnehmer, der mittels einer Steilvorrichtung (2, 3) entgegen der Neigung eines Wagenkastens (4) um einen Stellwinkel (γ) rückführbar ist, wobei die Stellvorrichtung (2, 3) folgende Merkmale umfaßt:
- wenigstens einen Stellantrieb (9, 19),
-- der eine isolierte Antriebsstange (10, 20) aufweist, die mit ihrem freien Ende direkt an einer der Stirnseiten des Stromabnehmergestells (1), vorzugsweise an der breiten Stirnseite, angelenkt ist,
-- und der mit seinem Gehäuse (11, 21) direkt am Dach (8) des Wagenkastens (4) angelenkt ist
- wenigstens zwei isolierte Lenkerstangen (5 - 7, 15 - 18),
-- die zu beiden Seiten der Längsachse des Wagenkastens (4) an gegenüberliegenden Ecken des Stromabnehmergestells (1) angeordnet sind
-- und die jeweils mit ihrem einen Ende direkt am Stromabnehmergestell (1) und mit ihrem anderen Ende direkt am Dach (8) des Wagenkastens (4) angelenkt sind.

2. Stromabnehmer nach Anspruch 1, bei dem der Stellantrieb als elektrischer Stellantrieb ausgebildet ist.

3. Stromabnehmer nach Anspruch 1, bei der Stellantrieb als hydraulischer Stellantrieb ausgebildet ist.

4. Stromabnehmer nach Anspruch 1, bei dem der Stellantrieb über wenigstens eine mechanische Verbindung (28) mit dem Fahrwerk des Wagenkastens (4) gekoppelt ist.

5. Stromabnehmer nach Anspruch 4, bei dem die mechanische Verbindung als Seilzug oder als Gestänge (28) ausgebildet ist.

6. Stromabnehmer nach Anspruch 1, bei dem der Stellantrieb über wenigstens eine elektrische Verbindung mit dem Fahrwerk des Wagenkastens (4) gekoppelt ist.

7. Stromabnehmer nach Anspruch 1, bei dem die Stellvorrichtung (2) zwei isolierte Lenkerstangen (5, 6), die an den Ekken der breiten Stirnseite angeordnet sind, und eine isolierte Lenkerstange (7), die mittig zur schmalen Stirnseite angeordnet ist und die jeweils mit ihrem einen Ende direkt am Stromabnehmergestell (1) und mit ihrem anderen Ende direkt am Dach (8) des Wagenkastens (4) angelenkt sind.

8. Stromabnehmer nach Anspruch 1, bei dem die Stellvorrichtung (3) vier isolierte Lenkerstangen (15 - 18) umfaßt, die an den Ecken des Stromabnehmergestells (1) angeordnet sind und die jeweils mit ihrem einen Ende direkt am Stromabnehmergestell (1) und mit ihrem anderen Ende direkt am Dach (8) des Wagenkastens (4) angelenkt sind.

9. Stromabnehmer nach Anspruch 1, bei dem zu beiden Seiten des Stromabnehmergestells (1) jeweils ein Seitenführungslenker (12, 13) angeordnet ist, der jeweils mit seinem einen Ende an der Längsseite des Stromabnehmergestells (1) und mit seinem anderen Ende am Dach (8) des Wagenkastens (4) angelenkt ist.

10. Stromabnehmer nach Anspruch 8, bei dem jeweils die beiden isolierten Lenkerstangen (15, 17; 16, 18), die gemeinsam an einer Längsseite des Stromabnehmergestells (1) angeordnet sind, formschlüssig mit einer Lenkerwelle (22, 23) verbunden sind.

11. Stromabnehmer nach Anspruch 10, bei dem die Lenkerwellen (22, 23) am Dach (8) des Wagenkastens (4) über Lager (24 - 27) gehaltert sind.

12. Stromabnehmer nach Anspruch 10, bei dem die Lenkerwellen im Stromabnehmergestell (1) über Lager gehaltert sind.

13. Stromabnehmer nach Anspruch 9, bei dem die isolierten Seitenführungslenker (12, 13) elastisch gelagert sind.

14. Stromabnehmer nach Anspruch 11 oder 12, bei dem die Lenkerwellen elastisch gelagert sind.

15. Stromabnehmer nach Anspruch 1, bei dem die isolierten Lenkerstangen (5 - 7, 15 - 18) auf dem Dach (8) des Wagenkastens (4) elastisch gelagert sind.

16. Stromabnehmer nach Anspruch 1, bei dem die isolierten Lenkerstangen im Stromabnehmergestell (1) elastisch gelagert sind.

17. Stromabnehmer nach Anspruch 1, bei dem das Stromabnehmergestell (1) mit einer schwenkbaren Stütze (32) für die isolierten Lenkerstangen (17, 18) ausgerüstet ist.

18. Stromabnehmer nach Anspruch 10, bei dem die Lenkerwellen als Exzenterwellen ausgebildet sind.

19. Stromabnehmer nach Anspruch 10, bei dem die Lenkerwellen in ihrer Lange verstellbar sind.
